# EUROPEAN PATENT SPECIFICATION

(11) **EP 2 150 698 B1**
(45) Date of publication and mention of the grant of the patent: **05.12.2012**
(21) Application number: 08734522.9
(22) Date of filing: 30.04.2008
(51) Int. Cl.: F03B 17/00, F03B 17/06

(54) **HYDROPOWER IN PIPES**
WASSERKRAFT IN ROHREN
ENERGIE HYDRAULIQUE DANS DES TUYAUX

(30) Priority: 30.04.2007 DK 200700648
(43) Date of publication of application: 10.02.2010
(73) Proprietor: Global Water Energy Aps, 2600 Glostrup (DK)
(72) Inventor: RASMUSSEN, Karsten, DK-2820 Gentofte (DK)
(74) Representative: Tellefsen, Jens J.
(86) International application number: PCT/DK2008/000165
(87) International publication number: WO 2008/131774

(56) References cited:
- WO-A-2007/016505
- DE-A1- 10 131 821
- DE-A1- 19 932 337
- DE-U1- 20 114 752
- FR-A- 2 284 779
- FR-A- 2 880 389
- JP-A- 58 160 561
- US-A- 1 402 710
- US-A- 4 378 195
- US-A- 5 882 143

## Description

### Field of the Invention

The present invention concerns an apparatus for generating energy from flowing liquids.

Flowing liquids may typically be found in sewer pipes, rainwater pipes, rivers, ditches, streams and the like. Due to the drop in the pipeline or channel, the liquid will flow in direction from a higher level towards a lower level. In that way, the liquid has accumulated some potential energy which is released as kinetic energy by flowing in the channel or pipe.

### Background of the Invention

Solutions for utilising the energy arising from flowing liquids in pipes or channels have previously been proposed, see e.g. WO 2006/108264 and where the turbine is raised and lowered into the flow, see e.g. WO2007/016505.

Herein is disclosed a system where one or more generators are lowered into the liquid, where each unit includes a turbine having a number of impellers, such that when the liquid flows past the turbine, striking the impellers, these will be forced around, rotating and generating electric power in a generator. This construction, however, has a number of drawbacks, as the apparatus itself takes up a substantial part of the cross-section and thereby of the free cross-section for liquid flow, reducing the liquid speed appreciably. This is of course of importance in connection with extracting as much energy as possible from the flowing liquid, but if the liquid conversely contains material there will be a greater tendency to sedimenting of this material due to the low liquid speed, thereby blocking the pipe or channel. Furthermore, the impellers are difficult to keep clean, as objects carried with the water, e.g. plant roots, plants, waste or similar, may get jammed in the impellers, thereby blocking generation of energy, while the apparatus as such will obstruct the liquid flow cross-section at the same time. This entails that regular maintenance inspections are to be performed which depending on the position of the apparatus may entail substantial costs in order to keep the apparatus running.

Corresponding prior art systems are known from US 2007/0182159, US 4137005, US 4737070 and others.

### Object of the Invention

The object of the present invention is thus to provide an apparatus which is largely maintenance-free and only causing a slight lowering of the liquid speed as well so that unfavourable side effects, such as e.g. sedimentation downstream of the apparatus, is avoided or minimised.

### Description of the Invention

The invention addresses this by providing an apparatus for generating energy, where the apparatus includes a body with a continuous, closed surface, a shaft on which the body is rotatably arranged, the shaft being suspended so as to rotate freely, and a generator connected to the rotatable body or the rotatable shaft and that the apparatus is arranged in connection with a pipe, where the pipe along a length about the apparatus is divided into an upper and a lower part, where the shaft is mounted in the upper part and that the upper part of the pipe may be displaced vertically in relation to the lower part.

As the apparatus is provided with a body with a continuous, closed surface, there is a minimal risk that impurities or objects carried with the liquid in the pipe will interfere with the apparatus and thereby prevent the body from rotating. The body may be arranged for rotation on a still-standing shaft or journal, in which case the shaft will act as a stator while the body will act as rotor, such that energy is generated by rotation of the body around the shaft. Alternatively, there may be a fixed connection between body and shaft so that the shaft can rotate freely and thereby will be connected with a generator which thus generates the required energy.

In connection with the present invention, by "body" is meant an element having a certain inner volume. In the prior art, it is common to use impellers with various designs, but impellers should not be compared with body, as impeller constructions are designated as plate members fastened to a shaft, so that the individual plates by contact with a flowing medium will make the shaft rotate. The blades on the impeller wheel will furthermore have a tendency of retaining objects in the medium, e.g. seaweed or other water plants, cordage, waste or other contaminants etc. in flowing water. This will particularly be pronounced in sewers and other pipe systems. These foreign elements will of course limit the rotation of the impeller and thereby the output.

The body may therefore be described as an item with a relatively large inner volume compared to the surface (whereas an impeller will have large surface and small inner volume).

The embodiment further provides for rapid mounting, as mounting e.g. is effected by exposing the pipe or part of the pipe in which the apparatus according to the invention is desired to be installed, or by cutting a suitable length of the pipe and then inserting the apparatus. As the apparatus both has an upper and a lower part it becomes reestablished at the place where the apparatus according to the invention is mounted. By subsequently enabling to displace the upper part vertically in relation to the lower part, and simultaneously mounting the shaft in the upper part, the submersion of the body in the liquid may thus be controlled while simultaneously achieving a design which is invisible from the surface of e.g. the ground or the road.

In a further preferred embodiment of the invention, the shaft is mounted in liquid conducting pipes or liquid conducting channels, and the apparatus contains means by which the body can be brought into contact with the liquid.

In this embodiment it is possible to vary whether or how much the body is to be brought into contact with the liquid. This may be of interest particularly where the pipes in which the liquid is running are not supplied with constant amounts of liquid, but where there are varying amounts of liquid, such that at very small amounts of liquid it is not desirable to extract more energy from the liquid as this will substantially lower the flow rate in the pipe, thereby increasing the risk of sedimentation. There may also be other reasons for not generating electricity, e.g. in connection with excessive production or other.

The means used for bringing the body into or out of contact with the liquid may e.g. include one or more telescopes, whereby the body can be moved from a position in contact with the liquid to a position without any contact with the liquid.

As an alternative to mechanically or hydraulically bringing the body into or out of contact with the liquid, the body may be provided with a weight causing a part of the body to be partially submerged in the liquid, so that there some contact between the body and the flowing liquid is always ensured, particularly by rotatably suspending the shaft, such that the body can float upon the liquid and thereby vary its level in the channel depending on the liquid level in the channel.

In a further preferred embodiment, the apparatus is mounted in a well including a pipe section that may be connected to the liquid conducting channel or pipe, and a funnel arranged largely perpendicularly to the pipe section and capable of connecting the pipe section with a cover.

This embodiment is particularly suited for pipelines or channels where it may be expected that a very large amount of foreign material, such as waste, branch pieces or similar may impede the intended effect of the apparatus in spite of the very streamlined and largely maintenance-free design of the apparatus. It may thus be desirable to provide an inspection well so that in case of blocking it is possible rapidly to examine the cause of the problem and remedy it as quickly as possible without necessitating digging or other interference with the piping, but which may just be handled through the attached funnel. The funnel may e.g. be a number of well rings stacked upon each other in a way corresponding to normal sewer pipe openings.

By larger installations, the apparatus may be mounted in a chamber in immediate communication with the flowing liquid, so that inspection and maintenance may occur directly from the chamber.

In a further preferred embodiment of the invention, several bodies may be arranged on respective shafts in immediate vicinity of each other. This is particularly suitable where there is either a greatly varying amount of liquid in the pipe or channel, or where there are constantly relatively large amounts of liquid such that the liquid may drive more apparatuses in succession without substantially reducing its flow rate.

In yet a preferred embodiment of the invention, the apparatus is provided with a liquid level gauge and/or a liquid flowmeter, the meter or gauge providing input to a mechanism that may adjust the submersion of the body into the liquid depending on pre-defined parameters regarding the liquid flow in the pipe.

In that way it is possible to predefine and thereby also maintaining a minimum amount of liquid before energy is extracted via the apparatus in the pipeline, so that it is ensured that no sedimentation occurs in the liquid flowing past the apparatus. Also, liquid level and liquid flow may statistically contribute to determining the theoretical amount of energy which may be extracted from a given cross-section by installing an apparatus according to the present invention.

In a further preferred embodiment of the apparatus, the surface of the body is provided with corrugations, such as rounded grooves arranged transversely to the flow direction, rounded jags or other deformations which may enhance the engagement of the liquid with the body.

Experiments have shown that the body, even with a relatively smooth surface without any deformations, will be brought to rotate by submersion in a liquid, but the engagement between the flowing liquid and the body may be appreciably enhanced by applying some deformations on the body, e.g. grooves transversely of the liquid flow direction, such that the sides of the grooves are acted on by the flowing liquid, thereby making the body rotate, whereby energy may be generated. Rounded jags may similarly provide a corresponding effect. The deformations at the outer side of the body may be chosen in dependence of which type of liquid the body is intended to be submerged, as provision is made for possible material that may be carried with the liquid or the nature of the liquid.

The body may have any geometric shape and extent in the transverse direction of the liquid flow, however, the body will typically be designed rotationally symmetrical so that an even and uniform rotation of the body relative to the liquid flow may be achieved.

### Description of the Drawing

In the following, the invention will be further explained with reference to some schematic examples with reference to the accompanying drawing, wherein:
Fig. 1 shows a first embodiment of the invention wherein the bodies are submerged in the liquid;
Fig. 2 shows the same embodiment but where the bodies are elevated above the liquid;
Fig. 3 shows schematically an elevating/lowering device; and
Fig. 4 shows schematically incorporation into an existing sewer system.

### Detailed Description of the Invention

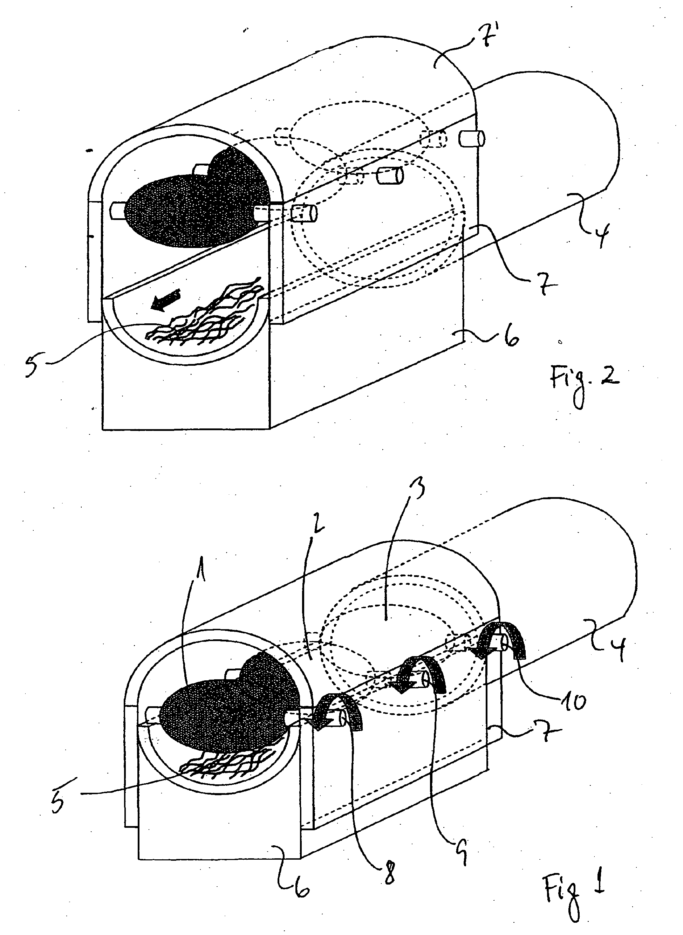

In the example illustrated in Fig. 1, three bodies 1, 2, 3 are mounted in connection with a liquid-filled pipe 4. The bodies 1, 2, 3 are submerged in the liquid 5 running inside the pipe 4.

If the apparatus is inserted in a pipeline 4, an apparatus with two tubular halves is provided. The upper tubular half 7 may be vertically displaced in relation to the lower tubular half 6 so that the bodies 1 may be brought into contact with the liquid or out of contact with the liquid 5, as illustrated with reference to Fig. 2.

The bodies 1, 2, 3 are mounted on shafts 8, 9, 10 such that the liquid 5 engages the outer side of the bodies 1, 2, 3, rotating the shafts 8, 9, 10 as indicated by the arrows. By subsequently connecting a generator 8, 9, 10, electric energy there may thus be generated. By displacing the upper tubular half 7 in relation to the lower half 6 as illustrated in Fig. 2, the bodies 1, 2, 3 will not be in contact with the liquid 5 in the pipe 4. It is thus ensured that the liquid 5 in the pipe 4 may flow freely past the apparatus according to the invention so that the liquid flow is not prevented from flowing on, but in turn, no energy will be generated by means of the bodies 1, 2, 3. This may occur in cases where there is a very weak liquid flow in the pipeline 4 or where there is no need for generation of energy.

The energy, in particular electricity, generated by the apparatus may be utilised on equal terms with the energy generated by e.g. a windmill, and be conducted to the public electricity network. Alternatively, the energy may be accumulated and used for e.g. print making which then can be used as fuel in a turbine or similar.

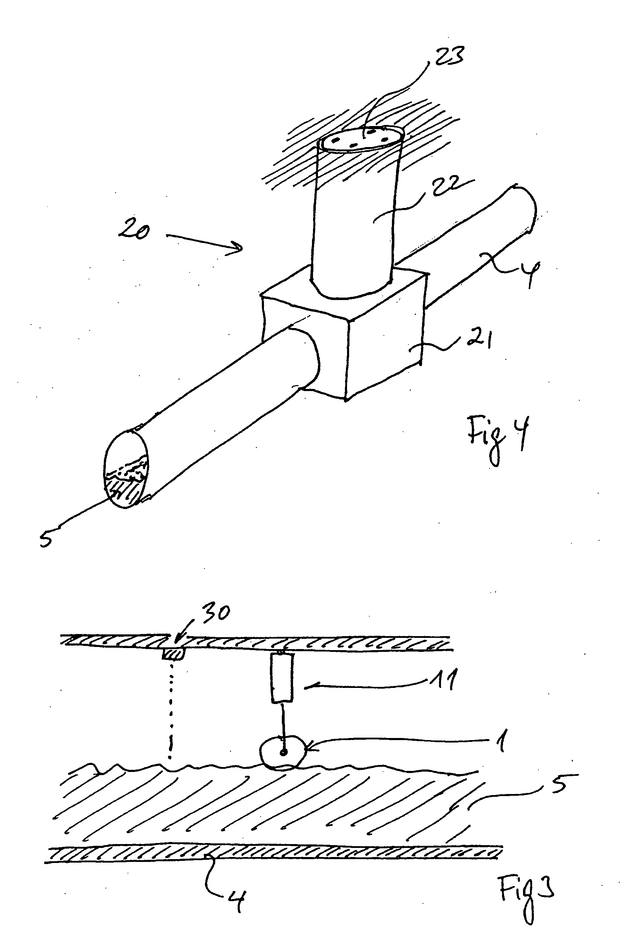

In Fig. 3 is illustrated an alternative lifting arrangement in which the body 1 is mounted in a telescope 11 so that by manipulating the length of the telescope, the body can be submerged into the liquid 5, or by completely withdrawing the telescope 11, the body 1 can be brought out of contact with the liquid 5.

In Fig. 4 is furthermore illustrated an embodiment in which the apparatus is provided inside a well 20 which is mounted in a pipeline 4. The well consists of a chamber 21 in which an apparatus according to the invention is mounted, e.g. as described with reference to Figs. 1 and 2. The chamber 21 is connected with a funnel 22 up to e.g. the ground surface wherein a manhole cover 23 is provided. By removing the manhole cover it is thus immediately possible to inspect the apparatus according to the invention arranged in the box 21 and thereby ensure that the apparatus is functioning optimally. It is also possible to access the apparatus via the funnel 22 for possible maintenance, cleaning and the like.

In connection with inspection of pipelines, e.g. with video robots, it is also possible to elevate the apparatus as shown on Figs. 1, 2 and 4, such that the video robot can pass by unhindered. The required electric installations are not shown in any of the illustrations as these are regarded as trivial and thus outside the scope of the invention.

In order to inspect the apparatus according to the invention in the box 21, the upper part of the pipe 7 (see Fig. 2) may be designed without the U-shaped 7' such that the bodies are immediately visible when the manhole cover 23 is removed.

The invention may furthermore be controlled by means of sensors such that e.g. a level gauge 30 (see Fig. 3) is provided which by means of ultrasound or infrared radiation detects the liquid level, thereby enabling calculation of the amount of liquid in the liquid cross-section, so that the energy that may be extracted from the liquid in the pipeline can be determined from empirical values.

In the views of the bodies (see Figs. 1 and 2) indicated in the detailed description, these are shown as rotationally symmetric, oval bodies, but they may of course be shaped as balls or as cylinders, depending on the situation and the most optimal way of providing contact with the liquid surface.

## Claims

1. An apparatus for generating energy from a flowing liquid (5), the apparatus including:
- a body (1,2,3) with a continuous, closed surface;
- a shaft (8,9,10) on which the body (1,2,3) is rotatably arranged, the shaft (8,9,10) suspended so as to rotate freely;
- a generator connected to the rotatable body (1,2,3) or to the rotatable shaft (8,9,10), and that the apparatus is arranged in connection with a pipe (4), where the pipe (4) along a length about the apparatus is divided into an upper (7) and a lower part (6), where the shaft (8,9,10) is mounted in the upper part (7) and that the upper part (7) of the pipe (4) may be displaced vertically in relation to the lower part (6).

2. Apparatus according to claim 1, **characterised in that** the shaft (8,9,10) is mounted in a liquid conducting pipe (4) or a liquid conducting channel, and that the apparatus contains means (11) by which the body can be brought into contact with the liquid (5).

3. Apparatus according to claim 2, **characterised in that** the means (11) includes one or more telescopes by which the body (1,2,3) can be moved from a position in contact with the liquid (5) to a position without any contact with the liquid.

4. Apparatus according to claim 1, **characterised in that** the body (1,2,3) has a weight causing the body to be partly submerged into the liquid (5).

5. Apparatus according to claim 1 or 4, **characterised in that** the apparatus is mounted in a well (20,21) including a pipe section (4) that may be connected to the liquid conducting channel or pipe (4), and a funnel (22) arranged largely perpendicularly to the pipe section (4) and capable of connecting the pipe section with a cover (23).

6. Apparatus according to one or more preceding claims, wherein several bodies (1,2,3) on respective shafts (8,9,10) are arranged in immediate vicinity of each other.

7. Apparatus according to one or more preceding claims, **characterised in that** the apparatus includes a liquid level gauge and/or a liquid flowmeter (30), the meter or gauge providing input to a mechanism that may adjust the submersion of the body into the liquid (5) depending on pre-defined parameters regarding the liquid flow in the pipe.

8. Apparatus according to one or more preceding claims, **characterised in that** the surface of the body (1,2,3) is provided with corrugations, such as rounded grooves arranged transversely to the flow direction, rounded jags or other deformations which may enhance the engagement of the liquid with the body.

## Patentansprüche

1. Vorrichtung zum Erzeugen von Energie aus einer strömenden Flüssigkeit (5), wobei die Vorrichtung Folgendes aufweist:
- einen Körper (1, 2, 3) mit einer kontinuierlichen, geschlossenen Oberfläche;
- eine Welle (8, 9, 10), auf der der Körper (1, 2, 3) drehbar angeordnet ist, wobei die Welle (8, 9, 10) frei drehbar aufgehängt ist;
- einen Generator, der mit dem drehbaren Körper (1, 2, 3) oder mit der drehbaren Welle (8, 9, 10) verbunden ist;
und dass die Vorrichtung in Verbindung mit einem Rohr (4) angeordnet ist, wobei das Rohr (4) entlang einer Länge um die Vorrichtung in einen oberen Teil (7) und einen unteren Teil (6) geteilt ist, wobei die Welle (8, 9, 10) in dem oberen Teil (7) angebracht ist und der obere Teil (7) des Rohrs (4) in Relation zu dem unteren Teil (6) vertikal verschiebbar ist.

2. Vorrichtung nach Anspruch 1,
**dadurch gekennzeichnet, dass** die Welle (8, 9, 10) in einem Flüssigkeit führenden Rohr (4) oder einem Flüssigkeit führenden Kanal angebracht ist, und dass die Vorrichtung eine Einrichtung (11) aufweist, durch die der Körper mit der Flüssigkeit (5) in Kontakt gebracht werden kann.

3. Vorrichtung nach Anspruch 2,
**dadurch gekennzeichnet, dass** die Einrichtung (11) ein oder mehrere Teleskopelemente aufweist, durch die der Körper (1, 2, 3) von einer Position in Kontakt mit der Flüssigkeit (5) in eine Position ohne jeglichen Kontakt mit der Flüssigkeit bewegt werden kann.

4. Vorrichtung nach Anspruch 1,
**dadurch gekennzeichnet, dass** der Körper (1, 2, 3) ein Gewicht aufweist, das ein teilweises Eintauchen des Körpers in die Flüssigkeit (5) bewirkt.

5. Vorrichtung nach Anspruch 1 oder 4,
**dadurch gekennzeichnet, dass** die Vorrichtung in einem Schacht (20, 21) angebracht ist, der ein Rohrstück (4) beinhaltet, das mit dem Flüssigkeit führenden Kanal oder Rohr (4) verbunden werden kann, und ein Anschlusselement (22) im Wesentlichen senkrecht zu dem Rohrstück (4) angeordnet ist und dazu ausgebildet ist, das Rohrstück mit einer Abdeckung (23) zu verbinden.

6. Vorrichtung nach einem oder mehreren der vorhergehenden Ansprüche, wobei mehrere Körper (1, 2, 3) auf jeweiligen Wellen (8, 9, 10) in unmittelbarer Nähe zueinander angeordnet sind.

7. Vorrichtung nach einem oder mehreren der vorhergehenden Ansprüche, **dadurch gekennzeichnet, dass** die Vorrichtung einen Flüssigkeitsstandanzeiger und/oder einen Flüssigkeitsdurchflussmesser (30) aufweist, die eine Eingabe an einen Mechanismus bereitstellen, der das Eintauchen des Körpers in die Flüssigkeit (5) in Abhängigkeit von vorab definierten Parametern hinsichtlich der Flüssigkeitsströmung in dem Rohr einstellen kann.

8. Vorrichtung nach einem oder mehreren der vorhergehenden Ansprüche, **dadurch gekennzeichnet, dass** die Oberfläche des Körpers (1, 2, 3) mit Wellungen, wie abgerundeten Nuten quer zu der Strömungsrichtung, abgerundeten Zacken oder anderen Verformungen versehen ist, die das Zusammenwirken der Flüssigkeit mit dem Körper verbessern können.

## Revendications

1. Appareil pour générer de l'énergie à partir d'un liquide en écoulement (5), l'appareil comprenant :
- un corps (1,2,3) avec une surface fermée continue;
- un arbre (8,9,10) sur lequel le corps (1,2,3) est monté de manière rotative, l'arbre (8,9,10) est suspendu pour tourner librement ;
- un générateur connecté au corps rotatif (1,2,3) ou à l'arbre rotatif (8,9,10), et que l'appareil est aménagé en liaison avec un tuyau (4), le tuyau (4) est divisé en une partie supérieure (7) et inférieure (6) sur une longueur autour de l'appareil, l'arbre (8,9,10) est monté dans la partie supérieure (7), et que la partie supérieure (7) du tuyau (4) peut être déplacée verticalement vis-à-vis de la partie inférieure (6).

2. Appareil selon la revendication 1, **caractérisé en ce que** l'arbre (8,9,10) est monté dans un tuyau (4) conduisant du liquide ou un canal conduisant du liquide, et que l'appareil comprend des moyens (11) par lesquels le corps peut être mis en contact avec le liquide (5).

3. Appareil selon la revendication 2, **caractérisé en ce que** les moyens (11) comprennent un ou plusieurs télescopes avec lesquels le corps (1,2,3) peut être déplacé d'une position en contact avec le liquide (5) à une position sans contact avec le liquide.

4. Appareil selon la revendication 1, **caractérisé en ce que** le poids du corps (1,2,3) fait que le corps est partiellement immergé dans le liquide (5).

5. Appareil selon la revendication 1 ou 4, **caractérisé en ce que** l'appareil est monté dans un puits (20,21) comprenant une section de tuyau (4) qui peut être connectée au canal conduisant du liquide ou au tuyau (4), et une cheminée (22) aménagée surtout perpendiculairement à la section de tuyau (4) et permettant de connecter la section de tuyau à un couvercle (23).

6. Appareil selon une ou plusieurs des revendications précédentes, dans lequel plusieurs corps (1,2,3) sur des arbres respectifs (8,9,10) sont disposés à proximité immédiate l'un de l'autre.

7. Appareil selon une ou plusieurs des revendications précédentes, **caractérisé en ce que** l'appareil comprend une jauge de niveau de liquide et/ou un débitmètre pour liquide (30), le mètre ou la jauge donne des informations à un mécanisme qui peut régler l'immersion du corps dans le liquide (5) selon des paramètres prédéfinés pour l'écoulement du liquide dans le tuyau.

8. Appareil selon une ou plusieurs des revendications précédentes, **caractérisé en ce que** la surface du corps (1,2,3) est pourvue de rainures, par exemple des rainures arrondies disposées transversalement par rapport à la direction d'écoulement, des pointes arrondies ou autres déformations qui peuvent améliorer l'engagement du liquide avec le corps.
